# EUROPEAN PATENT APPLICATION

(11) **EP 4 576 901 A1**
(43) Date of publication of application: **25.06.2025**
(21) Application number: 23928299.9
(22) Date of filing: 22.09.2023
(51) Int. Cl.: H04W 72/04

(54) **SLAVE DEVICE, MASTER DEVICE, COMMUNICATION SYSTEM, AND DATA TRANSMISSION METHOD**

(30) Priority: 21.03.2023 CN 202310310088
(71) Applicant: Huawei Technologies Co., Ltd., Shenzhen, Guangdong 518129 (CN)
(72) Inventor: SI, Xiaoshu, Shenzhen, Guangdong 518129 (CN); GAN, Shuang, Shenzhen, Guangdong 518129 (CN); QIU, Hao, Shenzhen, Guangdong 518129 (CN); XU, Fan, Shenzhen, Guangdong 518129 (CN)
(74) Representative: Maiwald GmbH
(86) International application number: PCT/CN2023/120771
(87) International publication number: WO 2024/192994

(57) **Abstract**

This application provides a first secondary device, and is applied to the field of wireless communication. The first secondary device includes a receiver and a transmitter. The transmitter is configured to send a first trigger frame to a first STA. The first trigger frame indicates the first STA to upload first uplink data. The first secondary device is associated with the first STA. Before receiving the first uplink data, the transmitter is further configured to send a size of target data to a primary device. The target data includes the first uplink data. The receiver is configured to receive information about an uplink slot from the primary device, where the uplink slot is obtained based on the size of the target data. The receiver is further configured to receive the first uplink data from the first STA. The transmitter is further configured to transmit the first uplink data to the primary device in the uplink slot. In this application, an uplink delay of a STA can be reduced by performing next-level scheduling slot allocation through the first uplink data that has not been received.

## Description

This application claims priority to Chinese Patent Application No. CN202310310088.6, filed with the China National Intellectual Property Administration on March 21, 2023 and entitled "SECONDARY DEVICE, PRIMARY DEVICE, COMMUNICATION SYSTEM, AND DATA TRANSMISSION METHOD", which is incorporated herein by reference in its entirety.

### TECHNICAL FIELD

This application relates to the field of wireless communication, and in particular, to a secondary device, a primary device, a communication system, and a data transmission method.

### BACKGROUND

As people have higher requirements on home bandwidth quality, one AP (Access Point) within a home cannot well provide coverage. More homes use multi-AP networking to enhance home network quality. Small-sized campuses or enterprises usually directly use multi-AP networking for wireless network coverage. An AC (Access Controller) is connected to a plurality of APs through a switch. The APs are deployed in different rooms of a home or in different areas of a campus to provide Wi-Fi access. Alternatively, in an FTTR (Fiber To The Room) scenario, a primary FTTR device is connected to a plurality of secondary FTTRs through an optical splitter. The secondary FTTRs are deployed in different rooms or different areas of a campus, and the secondary FTTRs provide a Wi-Fi access service. Wi-Fi signals (such as 2.4 GHz, 5.2 GHz, and 5.8 GHz signals) have a strong wall penetration capability. Within a home, strong co-channel or adjacent-channel interference exists between a plurality of Wi-Fi signals; in a campus or enterprise large-bay scenario, co-channel or adjacent-channel interference between a plurality of Wi-Fi signals is stronger. Wi-Fi contends for channels by using a carrier sense multiple access with collision avoidance (carrier sense multiple access with collision avoidance, CSMA/CA) mechanism defined by the conventional 802.11 protocol. When co-channel or adjacent-channel interference exists, a plurality of Wi-Fi devices contend for and obtain air interface resources at the same time, resulting in poor Wi-Fi experience.

### SUMMARY

This application provides a secondary device, a primary device, a communication system, and a data transmission method. An uplink delay of a station (Station, STA) can be reduced by performing next-level scheduling slot allocation through first uplink data that has not been received.

A first aspect of this application provides a first secondary device. The first secondary device includes a receiver and a transmitter. The transmitter is configured to send a first trigger frame to a first STA. The first trigger frame indicates the first STA to upload first uplink data. The first secondary device is associated with the first STA. Before receiving the first uplink data, the transmitter is further configured to send a size of target data to a primary device. The first secondary device may not have started receiving the first uplink data, or may have received a part of the first uplink data. The target data includes the first uplink data. The receiver is configured to receive information about an uplink slot from the primary device. The uplink slot is obtained based on the size of the target data. The receiver is further configured to receive the first uplink data from the first STA. The transmitter is further configured to transmit the first uplink data to the primary device in the uplink slot.

In an optional manner of the first aspect, the transmitter is further configured to send wireless transmission time information to the primary device. The wireless transmission time information includes wireless transmission time information of the first trigger frame or the first uplink data. The uplink slot is obtained based on the size of the target data and the wireless transmission time information. If the primary device allocates the uplink slot to the first secondary device based only on the size of the target data, windowing time of the uplink slot may be earlier than a wireless transmission end moment of the first uplink data, resulting in a waste of the uplink slot. In this application, the primary device may obtain the wireless transmission end moment of the first uplink data through the wireless transmission time information, thereby allocating a more accurate uplink slot to the first secondary device. Therefore, in this application, a transmission resource can be saved.

In an optional manner of the first aspect, the transmitter is configured to send the first trigger frame to the first STA at a first moment. The wireless transmission time information of the first trigger frame includes information about the first moment and wireless transmission duration of the first trigger frame. The primary device may obtain the wireless transmission end moment of the first uplink data based on the transmission duration of the first trigger frame, the first moment, and a size of the first uplink data, and allocate the uplink slot to the first secondary device based on the wireless transmission end moment and the size of the target data. During actual application, the first secondary device may also obtain the wireless transmission end moment of the first uplink data based on the first moment, the transmission duration of the first trigger frame, and the size of the first uplink data. The first secondary device sends the wireless transmission end moment to the primary device. However, clocks of the primary device and the first secondary device may be out of synchronization. As a result, the wireless transmission end moment obtained by the first secondary device is different from the wireless transmission end moment obtained by the primary device. An incorrect uplink slot may be obtained at an inaccurate wireless transmission end moment, thereby reducing communication reliability. Therefore, in this application, the communication reliability can be improved.

In an optional manner of the first aspect, the receiver is further configured to receive the first trigger frame from the primary device. In some application scenarios, the first secondary device may not have a complete wireless function. As a result, the first trigger frame cannot be generated. Therefore, in this application, generalization of technical solutions can be improved.

In an optional manner of the first aspect, the first secondary device further includes a processor. The processor is configured to split the first uplink data into a plurality of pieces of uplink sub-data. The uplink slot includes a plurality of time periods that are non-consecutive. The transmitter is configured to transmit the plurality of pieces of uplink sub-data to the primary device in the plurality of time periods. The plurality of time periods and the plurality of pieces of uplink sub-data are in a one-to-one correspondence. The first uplink data is split into the plurality of pieces of uplink sub-data, so that a granularity of an uplink slot obtained through division by the primary device can be reduced, and an uplink delay of other data can be reduced.

In an optional manner of the first aspect, the receiver is further configured to: receive a first uplink control instruction from the primary device, and perform air interface contention according to the first uplink control instruction. After the air interface contention succeeds, the transmitter is configured to send the first trigger frame to the first STA. The air interface contention is controlled through the primary device, so that a probability of an air interface contention collision can be reduced, thereby improving communication efficiency.

In an optional manner of the first aspect, before receiving the first uplink control instruction, the first secondary device is in a silent state. The first secondary device in the silent state does not perform air interface contention. Therefore, air interface scheduling is performed through a control instruction, so that a probability of an air interface collision can be reduced. Therefore, in this application, the communication efficiency can be provided.

In an optional manner of the first aspect, wired communication is performed between the primary device and the first secondary device. Wireless communication is performed between the first secondary device and the first STA.

A second aspect of this application provides a primary device. The primary device includes a processor and a transceiver. The transceiver is configured to receive a size of target data from a first secondary device. The first secondary device may include the size of the target data in a first reply frame. The first secondary device is associated with a first STA. The target data includes first uplink data that has not been received by the first secondary device. At a second moment at which the first secondary device sends the first reply frame, the first secondary device may not have started receiving the first uplink data, or may have received a part of the first uplink data. The first uplink data is sent by the first STA based on the first trigger frame. The processor is configured to allocate an uplink slot to the first secondary device based on the size of the target data. The transceiver is further configured to: send information about the uplink slot to the first secondary device, and receive the first uplink data from the first secondary device in the uplink slot.

In an optional manner of the second aspect, the transceiver is further configured to receive wireless transmission time information from the first secondary device. The wireless transmission time information includes wireless transmission time information of the first trigger frame or the first uplink data. The processor is configured to allocate the uplink slot to the first secondary device based on the size of the target data and the wireless transmission time information.

In an optional manner of the second aspect, the wireless transmission time information of the first trigger frame includes information about a first moment and wireless transmission duration of the first trigger frame. The first moment is a moment at which the first secondary device sends the first trigger frame. The processor is configured to: obtain a wireless transmission end moment of the first uplink data based on the transmission duration of the first trigger frame, the first moment, and a size of the first uplink data, and allocate the uplink slot to the first secondary device based on the wireless transmission end moment and the size of the target data.

In an optional manner of the second aspect, the processor is further configured to generate the first trigger frame. The transceiver is further configured to transmit the first trigger frame to the first secondary device.

In an optional manner of the second aspect, the uplink slot includes a plurality of time periods that are non-consecutive. The transceiver is further configured to receive a plurality of pieces of uplink sub-data from the first secondary device in the plurality of time periods. The plurality of time periods and the plurality of pieces of uplink sub-data are in a one-to-one correspondence. The processor is further configured to combine the plurality of pieces of uplink sub-data, to obtain the first uplink data.

In an optional manner of the second aspect, the processor is further configured to generate a first uplink control frame based on an air interface transmission sequence of at least one secondary device. The transceiver is further configured to send a first uplink control instruction to the first secondary device. The first uplink control instruction instructs the first secondary device to perform air interface contention, and to send the first trigger frame to the first STA after the air interface contention succeeds. The at least one secondary device includes the first secondary device.

In an optional manner of the second aspect, the at least one secondary device further includes a second secondary device. The transceiver is configured to receive a first reply frame from the first secondary device. The first reply frame includes the size of the target data. Based on the first reply frame, the transceiver is further configured to send a second control instruction to the second secondary device based on the air interface transmission sequence. The second control instruction instructs the second secondary device to perform air interface contention and perform air interface transmission. The second control instruction is sent through triggering of the first reply frame, so that a probability of an air interface contention collision can be reduced, thereby improving communication efficiency.

In an optional manner of the second aspect, the second secondary device is associated with a second STA. The second control instruction is a second uplink control instruction or a second downlink control instruction. The second uplink control instruction instructs the second secondary device to perform air interface contention, and send a second trigger frame to the second STA after the air interface contention succeeds. The second trigger frame indicates the second STA to upload second uplink data. The second downlink control instruction instructs the second secondary device to perform air interface contention, and send second downlink data to the second STA after the air interface contention succeeds.

In an optional manner of the second aspect, a moment at which the first secondary device sends the first reply frame is a second moment. A moment at which the second secondary device receives the second control instruction is a third moment. An interval between the second moment and the third moment is less than or equal to 64 microseconds. The interval between the second moment and the third moment is controlled, so that the second secondary device can receive a control instruction before the wireless transmission end moment of the first uplink data. If the second secondary device receives the control instruction after a previous time of air interface transmission ends, the air interface has idle time. Therefore, in this application, the air interface idle time can be reduced, thereby improving air interface transmission efficiency.

In an optional manner of the second aspect, the third moment is within a wireless transmission time period of the first uplink data. If the second secondary device receives the control instruction after a previous time of air interface transmission ends, the air interface has idle time. Therefore, in this application, the air interface idle time can be reduced, thereby improving the air interface transmission efficiency.

In an optional manner of the second aspect, a control frame is transmitted between the primary device and the first secondary device, and between the primary device and the second secondary device through the passive optical network (passive optical network, PON) protocol, the optical transport network (optical transport network, OTN) protocol, or the time-sensitive network (time-sensitive network, TSN) protocol. The control frame includes the first reply frame and the second control instruction. The control frame is transmitted through the foregoing protocol, so that the interval between the second moment and the third moment may be controlled, thereby reducing the air interface idle time, and improving the air interface transmission efficiency.

In an optional manner of the second aspect, the transceiver is further configured to: receive a plurality of pieces of buffer information from the at least one secondary device, and determine the air interface transmission sequence based on the plurality of pieces of buffer information. The buffer information may include uplink buffer information and/or downlink buffer information. In this application, the primary device performs the air interface scheduling based on the plurality of pieces of buffer information, to improve the air interface transmission efficiency.

A third aspect of this application provides a communication system. The communication system includes a primary device and at least one secondary device. The primary device is connected to the at least one secondary device. The at least one secondary device includes a first secondary device. The first secondary device is associated with a first STA. The first secondary device is configured to send a first trigger frame to the first STA. The first trigger frame indicates the first STA to upload first uplink data. Before receiving the first uplink data, the first secondary device is further configured to send a size of target data to the primary device. The target data includes the first uplink data. The primary device is configured to: allocate an uplink slot to the first secondary device based on the size of the target data and wireless transmission time information, and send information about the uplink slot to the first secondary device. The first secondary device is further configured to: receive the first uplink data from the first STA, and transmit the first uplink data to the primary device in the uplink slot.

A fourth aspect of this application provides a data transmission method. The data transmission method includes the following steps: A first secondary device sends a first trigger frame to a first STA. The first trigger frame indicates the first STA to upload first uplink data. The first secondary device is associated with the first STA. Before receiving the first uplink data, the first secondary device sends a size of target data to a primary device. The target data includes the first uplink data. The first secondary device receives information about an uplink slot from the primary device. The uplink slot is obtained based on the size of the target data. The first secondary device receives the first uplink data from the first STA. The first secondary device transmits the first uplink data to the primary device in the uplink slot.

A fifth aspect of this application provides a data transmission method. The data transmission method includes the following steps: A primary device receives a size of target data from a first secondary device. The first secondary device is associated with a first STA. The target data includes first uplink data that has not been received by the first secondary device. The first uplink data is sent by the first STA based on a first trigger frame. The primary device allocates an uplink slot to the first secondary device based on the size of the target data. The primary device sends information about the uplink slot to the first secondary device. The primary device receives the first uplink data from the first secondary device in the uplink slot.

A sixth aspect of this application provides a communication system. The communication system includes a primary device and at least one secondary device. The primary device is connected to the at least one secondary device. The at least one secondary device includes a first secondary device and a second secondary device. The primary device is configured to send a first control instruction to the first secondary device based on an air interface transmission sequence of the at least one secondary device. The first secondary device is configured to perform air interface contention and perform air interface transmission according to the first control instruction. After the air interface contention succeeds, the first secondary device is further configured to send a first reply frame to the primary device. Based on the first reply frame, the primary device is further configured to send a second control instruction to the second secondary device based on the air interface transmission sequence. The second secondary device is configured to perform air interface contention and perform air interface transmission according to the second control instruction.

In an optional manner of the sixth aspect, the first control instruction is a first uplink control instruction. After the air interface contention succeeds, the first secondary device is further configured to send a first trigger frame to a first STA. The first trigger frame indicates the first STA to upload first uplink data. The first STA is associated with the first secondary device. The first reply frame includes a size of target data. The target data includes the first uplink data. The primary device is further configured to: allocate an uplink slot to the first secondary device based on the size of the target data, and send information about the uplink slot to the first secondary device. That the first secondary device is configured to perform air interface transmission according to the first control instruction includes: The first secondary device is configured to receive the first uplink data from the first STA. The first secondary device is further configured to transmit the first uplink data to the primary device in the uplink slot.

In an optional manner of the sixth aspect, the first reply frame further includes wireless transmission time information. The wireless transmission time information includes wireless transmission time information of the first trigger frame or the first uplink data. The primary device is further configured to allocate the uplink slot to the first secondary device based on the size of the target data and the wireless transmission time information.

In an optional manner of the sixth aspect, that the first secondary device is further configured to send a first trigger frame to a first STA includes: The first secondary device is configured to send the first trigger frame to the first STA at a first moment. The wireless transmission time information of the first trigger frame includes information about the first moment and wireless transmission duration of the first trigger frame. That the primary device is further configured to allocate the uplink slot to the first secondary device based on the size of the target data and the wireless transmission time information includes: The primary device is configured to: obtain a wireless transmission end moment of the first uplink data based on the transmission duration of the first trigger frame, the first moment, and a size of the first uplink data, and allocate the uplink slot to the first secondary device based on the wireless transmission end moment and the size of the target data.

In an optional manner of the sixth aspect, the first control instruction is a first downlink control instruction. That the first secondary device is configured to perform air interface transmission according to the first control instruction includes: The first secondary device is configured to send first downlink data to the first STA according to the first control instruction.

In an optional manner of the sixth aspect, that the first secondary device is further configured to send a first reply frame to the primary device includes: The first secondary device is configured to send the first reply frame to the primary device at a second moment. The second secondary device is further configured to receive the second control instruction at a third moment.

In an optional manner of the sixth aspect, an interval between the second moment and the third moment is less than or equal to 64 microseconds.

In an optional manner of the sixth aspect, the third moment is before an end of air interface transmission time of the first secondary device.

In an optional manner of the sixth aspect, the second control instruction is a second uplink control instruction or a second downlink control instruction.

In an optional manner of the sixth aspect, before receiving the first control instruction, the first secondary device is in a silent state. Before receiving the second control instruction, the second secondary device is in a silent state.

It should be understood that descriptions of the first aspect are similar to descriptions of the second aspect. Therefore, for the descriptions of the first aspect, refer to descriptions in any optional manner of the second aspect. Similarly, descriptions of the second to sixth aspects are similar to the descriptions of the first aspect. Therefore, for the descriptions of any one of the second to sixth aspects, refer to the descriptions of any one of the first aspect or the optional manners of the first aspect. For example, wired communication is performed between the primary device and the first secondary device. Wireless communication is performed between the first secondary device and the first STA.

A seventh aspect of this application provides a computer storage medium, where the computer storage medium stores instructions, and when the instructions are executed on a computer, the computer is enabled to perform the method according to any one of the second aspect or the implementations of the second aspect; or the computer is enabled to perform the method according to any one of the third aspect or the implementations of the third aspect.

An eighth aspect of this application provides a computer program product, where when the computer program product is executed on a computer, the computer is enabled to perform the method according to any one of the second aspect or the implementations of the second aspect; or the computer is enabled to perform the method according to any one of the third aspect or the implementations of the third aspect.

### BRIEF DESCRIPTION OF DRAWINGS

FIG. 1 is a first schematic flowchart of a data transmission method according to an embodiment of this application;
FIG. 2 is a second schematic flowchart of a data transmission method according to an embodiment of this application;
FIG. 3 is a first time sequence diagram of uplink wireless transmission according to an embodiment of this application;
FIG. 4 is a third schematic flowchart of a data transmission method according to an embodiment of this application;
FIG. 5 is a second time sequence diagram of uplink wireless transmission according to an embodiment of this application;
FIG. 6 is a fourth schematic flowchart of a data transmission method according to an embodiment of this application;
FIG. 7 is a time sequence diagram of downlink wireless transmission according to an embodiment of this application;
FIG. 8 is a fifth schematic flowchart of a data transmission method according to an embodiment of this application;
FIG. 9 is a time sequence diagram of wireless transmission according to an embodiment of this application;
FIG. 10a is a first schematic structural diagram of a first secondary device according to an embodiment of this application;
FIG. 10b is a second schematic structural diagram of a first secondary device according to an embodiment of this application;
FIG. 11 is a schematic structural diagram of a primary device according to an embodiment of this application;
FIG. 12a is a first schematic structural diagram of a communication system according to an embodiment of this application;
FIG. 12b is a second schematic structural diagram of a communication system according to an embodiment of this application; and
FIG. 12c is a third schematic structural diagram of a communication system according to an embodiment of this application.

### DESCRIPTION OF EMBODIMENTS

This application provides a secondary device, a primary device, a communication system, and a data transmission method. An uplink delay of a STA can be reduced by performing next-level scheduling slot allocation through first uplink data that has not been received. It should be understood that "first", "second", "target", and the like used in this application are merely used for differentiated description, and cannot be understood as an indication or implication of relative importance, or an indication or implication of a sequence. In addition, for brevity and clarity, reference numbers and/or letters are repeated in a plurality of accompanying drawings of this application. The repetition does not indicate a strict restrictive relationship between various embodiments and/or configurations.

The data transmission method provided in this application is applied to the field of wireless communication. In the field of wireless communication, two levels of scheduling exist between a STA and an optical line termination (optical line termination, OLT). The first-level scheduling is wireless scheduling between the STA and the optical network termination (optical network termination, ONT). The second-level scheduling is wired scheduling between the ONT and the OLT. The two levels of scheduling reduce the uplink delay of the STA.

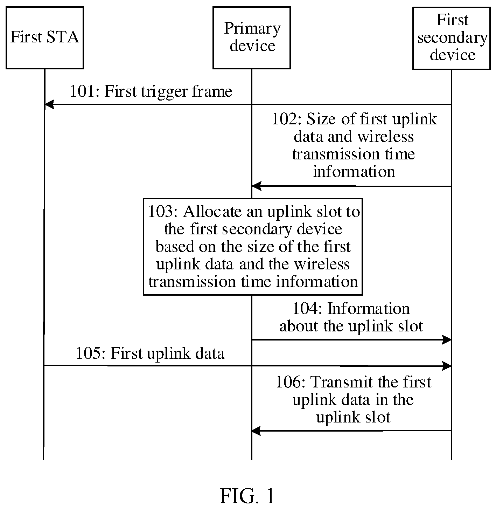

Therefore, this application provides a data transmission method. FIG. 1 is a first schematic flowchart of a data transmission method according to an embodiment of this application. As shown in FIG. 1, the data transmission method includes the following steps.

In step 101, a first secondary device sends a first trigger frame to a first STA.

The first secondary device may also be referred to as a secondary gateway or an access point (access point, AP). In a passive optical network (passive optical network, PON) system, the first secondary device may be referred to as a secondary optical network unit (optical network unit, ONU) or a secondary ONT. In a fiber to the room (fiber to the room, FTTR) scenario, the first secondary device may be referred to as a sub FTTR unit (sub FTTR unit, SFU) or a secondary FTTR. The first secondary device communicates with the first STA through a radio signal. The first STA is associated with the first secondary device. The first secondary device sends a first trigger frame (trigger frame) to the first STA. The association refers to a state that occurs after the first STA accesses the first secondary device. After the first STA accesses the first secondary device, the first STA and the first secondary device may transmit a service signal. The first trigger frame is used for allocating a wireless transmission uplink slot to the first STA, and indicating the first STA to upload first uplink data after a short inter-frame space (short inter-frame space, SIFS).

In step 102, the first secondary device sends a size of the first uplink data and wireless transmission time information to a primary device.

The primary device may also be referred to as a main gateway or an access controller (access control, AC). In the PON system, the primary device may be referred to as a main ONU or a main ONT. In the FTTR scenario, the primary device may be referred to as a main FTTR unit (main FTTR unit, MFU) or a main FTTR. The primary device and at least one secondary device are connected in a wireless or wired manner. When the primary device and the at least one secondary device are connected in a wired manner, the connection manner of the primary device and the at least one secondary device may be an optical fiber, a network cable, a power line, a cable, or the like. The at least one secondary device includes the first secondary device. When the primary device and the at least one secondary device are connected through an optical fiber, an optical splitter may be further included between the primary device and the at least one secondary device. In an uplink direction, uplink optical signals from all the secondary devices are coupled to the primary device through the optical splitter in a time division manner. In a downlink direction, the primary device allocates downlink optical signals to all the secondary devices through the optical splitter.

The first secondary device sends the size of the first uplink data and the wireless transmission time information to the primary device. The first secondary device may include the size of the first uplink data and the wireless transmission time information in a first reply frame. The wireless transmission time information may be wireless transmission time information of the first trigger frame or the first uplink data. For example, the wireless transmission time information is a wireless transmission end moment of the first uplink data. The first secondary device may obtain a wireless transmission start moment of the first uplink data based on a sending moment of the first trigger frame, transmission duration of the first trigger frame, and the SIFS. The first trigger frame includes a size of a wireless transmission uplink slot. The first secondary device obtains the wireless transmission end moment of the first uplink data based on the wireless transmission start moment of the first uplink data and the size of the uplink slot. Alternatively, the wireless transmission time information includes wireless transmission duration of the first trigger frame and information about a first moment. The first moment is a moment at which the first secondary device sends the first trigger frame to the first STA. After receiving the wireless transmission time information, the primary device obtains the wireless transmission start moment of the first uplink data based on the first moment, the wireless transmission duration of the first trigger frame, and the SIFS, and then obtains the wireless transmission end moment of the first uplink data based on the wireless transmission start moment and the size of the first uplink data.

It should be understood that, during actual application, the first secondary device may buffer uplink buffer data to be sent to the primary device. The uplink buffer data may be received by the first secondary device from an associated STA, for example, the first STA. Therefore, the first secondary device may send the size of the target data and the wireless transmission time information to the primary device. The target data may be the first uplink data, or the target data includes the uplink buffer data and the first uplink data. When the target data includes the first uplink data and the uplink buffer data, the first reply frame may include two fields. One field indicates the size of the first uplink data. The other field indicates a size of the uplink buffer data. In a subsequent example, an example in which the target data is the first uplink data is used for description.

In step 103, the primary device allocates an uplink slot to the first secondary device based on the size of the first uplink data and the wireless transmission time information.

The primary device allocates a wired transmission uplink slot to the first secondary device based on the size of the first uplink data and the wireless transmission time information. Specifically, the primary device allocates a windowing start moment of the uplink slot to the first secondary device based on the wireless transmission time information. For example, the wireless transmission time information is the wireless transmission end moment of the first uplink data. The windowing start moment may be equal to or later than the wireless transmission end moment. To reduce an uplink delay of the first STA, the windowing start moment may be as close as possible to the wireless transmission end moment. For example, the windowing start moment is equal to the wireless transmission end moment. The primary device further allocates windowing duration of the uplink slot to the first secondary device based on the size of the first uplink data. For example, the primary device obtains windowing duration based on an optical link transmission rate and the size of the first uplink data.

In step 104, the primary device sends information about the uplink slot to the first secondary device.

The information about the uplink slot includes the windowing start moment and a windowing end moment of the uplink slot, or the information about the uplink slot includes the windowing start moment and the windowing duration of the uplink slot. The windowing end moment may be obtained based on the windowing start moment and the windowing duration. The information about the uplink slot is a wired signal, such as an optical signal or an electrical signal.

In step 105, the first STA sends the first uplink data to the first secondary device.

Based on the foregoing descriptions of step 101, the first STA receives the first trigger frame from the first secondary device. The first STA sends the first uplink data to the first secondary device based on the first trigger frame. For example, after receiving the first trigger frame and after the SIFS, the first STA sends the first uplink data to the first secondary device. It should be understood that, in embodiments of this application, there is no strictly limited time sequence relationship between step 105 and steps 102 to 104. For example, step 104 may be performed after step 105. For another example, the wireless transmission start moment of the first uplink data is before step 102, and the wireless transmission end moment of the first uplink data is after step 104.

In step 106, the first secondary device transmits the first uplink data to the primary device in the uplink slot.

In the foregoing step 104, the first secondary device receives information about the wired transmission uplink slot from the primary device. After receiving the first uplink data of the first STA, the first secondary device transmits the first uplink data to the primary device in the uplink slot.

In embodiments of this application, the primary device allocates the wired transmission uplink slot to the first secondary device based on the size of the target data, that is, the primary device performs next-level scheduling slot allocation through the first uplink data that has not been received by the first secondary device. Therefore, in embodiments of this application, time that the first uplink data stays on the first secondary device can be reduced, thereby reducing the uplink delay of the first STA.

It should be understood that when the target data includes the uplink buffer data and the first uplink data, the primary device may allocate windowing duration of the uplink slot to the first secondary device based on the size of the target data. In this case, the windowing duration allocated by the primary device may be greater than the windowing duration allocated by the primary device in step 103. The first secondary device transmits the first uplink data and the uplink buffer data based on an uplink slot allocated by the primary device.

It should be understood that when the size of the first uplink data is greater than a first threshold, the uplink slot may include a plurality of time periods that are non-consecutive. A time period between the plurality of time periods is used for another secondary device to transmit uplink data. For example, the plurality of time periods include a time period 1, a time period 3, and a time period 5. A time period 2 is further included between the time period 1 and the time period 3. A time period 4 is further included between the time period 3 and the time period 5. The at least one secondary device further includes a second secondary device and a third secondary device. The time period 2 is used for the second secondary device to transmit second uplink data to the primary device. The time period 4 is used for the third secondary device to transmit third uplink data to the primary device. The first secondary device splits the first uplink data into a plurality of pieces of uplink sub-data. The plurality of time periods are used for transmitting the plurality of pieces of uplink sub-data. The plurality of time periods and the plurality of pieces of uplink sub-data are in a one-to-one correspondence.

Based on the foregoing descriptions of step 103, a windowing start moment of wired transmission may be equal to or later than the wireless transmission end moment. When the uplink slot includes a plurality of time periods that are non-consecutive, the windowing start moment of wired transmission may be earlier than the wireless transmission end moment. For example, the plurality of pieces of uplink sub-data include uplink sub-data 1, uplink sub-data 2, and uplink sub-data 3. When the first secondary device receives the uplink sub-data 1 but has not finished receiving the uplink sub-data 2 and the uplink sub-data 3, the first secondary device sends the uplink sub-data 1 to the primary device in the time period 1 based on the information about the uplink slot. In this case, the windowing start moment of wired transmission is later than a wireless transmission end moment of the uplink sub-data 1, and is earlier than the wireless transmission end moment of the first uplink data.

In embodiments of this application, a wireless module of the first secondary device may have a complete wireless function. In this case, the wireless module includes a media access control (media access control, MAC) layer processing unit, a physical layer processing unit, and a radio frequency unit. In an uplink direction, the radio frequency unit is configured to: receive a radio signal of the first uplink data from the first STA, and convert the radio signal into an in-phase quadrature (in-phase quadrature, IQ) signal. The physical layer processing unit is configured to perform physical layer-related processing on the IQ signal, such as synchronization, Fourier transformation, mapping, or descrambling, to obtain a MAC layer packet. The physical layer processing unit is configured to transmit the MAC layer packet to the MAC layer processing unit. The MAC layer processing unit is configured to perform MAC layer-related processing on the MAC layer packet, such as deframing, cyclic redundancy check (cyclic redundancy check, CRC), or acknowledgment (acknowledge, ACK) frame reply, to obtain an internet protocol (internet protocol, IP) packet. The MAC layer processing unit is configured to transmit the IP packet to the primary device. For example, the first secondary device further includes an optical module, and the first secondary device transmits the IP packet to the primary device through the optical module.

In embodiments of this application, a wireless module of the first secondary device may not have a complete wireless function. For example, the wireless module of the first secondary device includes a physical layer processing unit and a radio frequency unit, and does not include a MAC layer processing unit. The first secondary device is configured to transmit a MAC layer packet to the primary device. A MAC layer processing unit of the primary device is configured to perform MAC layer-related processing on the MAC layer packet. For another example, the wireless module of the first secondary device includes a radio frequency unit, and does not include a physical layer processing unit or a MAC layer processing unit. The first secondary device is configured to transmit an IQ signal to the primary device. A physical layer processing unit of the primary device is configured to perform physical layer-related processing on the IQ signal. A MAC layer processing unit of the primary device is configured to perform MAC layer-related processing on the MAC layer packet.

When the wireless module of the first secondary device has a complete wireless function, the first secondary device may generate a first trigger frame through a MAC layer processing unit. When the wireless module of the first secondary device does not have a complete wireless function, the first secondary device may send related information of the first STA, such as a MAC address, to the primary device. The primary device generates a first trigger frame based on the related information of the first STA, and sends the first trigger frame to the first secondary device. Before step 101, the first secondary device receives a first trigger frame from the primary device.

It should be understood that FIG. 1 is merely an example of a data transmission method according to an embodiment of this application. During actual application, a person skilled in the art may adaptively modify the step of the data transmission method based on a requirement. For example, during actual application, the first secondary device may not need to transmit wireless transmission time information to the primary device. The primary device uses a moment at which the first reply frame is received as the first moment. According to the method described above, the primary device may obtain the wireless transmission end moment of the first uplink data based on the first moment, the wireless transmission duration of the first trigger frame, the SIFS, and the size of the first uplink data. Alternatively, the primary device obtains the wireless transmission end moment of the first uplink data based on the first moment, target duration, and the size of the first uplink data. The target duration may be default duration from sending the first reply frame by the first secondary device to starting to receive the first uplink data by the first secondary device. For another example, the primary device allocates an uplink slot to the first secondary device based only on a size of the target data and a current moment. Time of the uplink slot is later than the current moment. Duration of the uplink slot is greater than duration needed for transmitting the target data. An increment part of the uplink slot is used as compensation for an uncertain wireless transmission end moment. The first secondary device may transmit useless data or other buffer data in the increment part of the uplink slot.

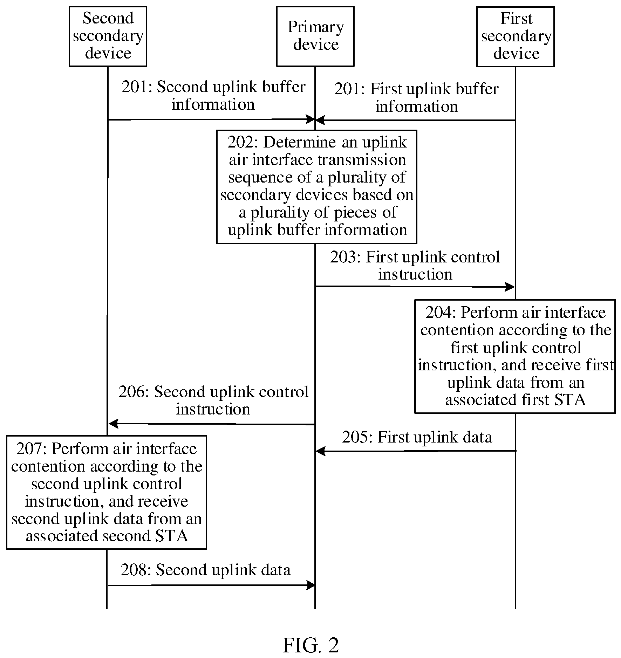

FIG. 2 is a second schematic flowchart of a data transmission method according to an embodiment of this application. As shown in FIG. 2, the data transmission method includes the following steps.

In step 201, a primary device receives a plurality of pieces of uplink buffer information from at least one secondary device.

The primary device may periodically receive the plurality of pieces of uplink buffer information from the at least one secondary device. The at least one secondary device includes a plurality of secondary devices. The plurality of pieces of uplink buffer information and the plurality of secondary devices are in a one-to-one correspondence. In an example in FIG. 2, the primary device receives first uplink buffer information from a first secondary device. The primary device receives second uplink buffer information from a second secondary device. The uplink buffer information indicates a size of to-be-uploaded data of a STA associated with a secondary device. For example, the first uplink buffer information is obtained by the first secondary device from an associated first STA. The first uplink buffer information indicates a size of first uplink data. The second uplink buffer information is obtained by the second secondary device from an associated second STA. The second uplink buffer information indicates a size of second uplink data. It should be understood that the first STA may further include other to-be-uploaded uplink data. Therefore, the first uplink buffer information may include a size of the other uplink data and the size of the first uplink data. In a subsequent example, only an example in which the uplink buffer information includes the size of the first uplink data is used for description. For descriptions of the primary device, the at least one secondary device, and the STA, refer to the foregoing descriptions in FIG. 1.

In step 202, the primary device determines an uplink air interface transmission sequence of the at least one secondary device based on the plurality of pieces of uplink buffer information.

In this embodiment of this application, only an example in which the at least one secondary device includes the first secondary device and the second secondary device is used for description. The primary device may determine an uplink air interface transmission sequence of the at least one secondary device based on sizes of the plurality of pieces of uplink buffer information. For example, when a size of the first uplink buffer information is greater than a size of the second uplink buffer information, the primary device determines that an uplink air interface transmission of the first secondary device precedes over an uplink air interface transmission of the second secondary device. When the size of the first uplink buffer information is less than or equal to the size of the second uplink buffer information, the primary device determines that the uplink air interface transmission sequence of the second secondary device precedes over the uplink air interface transmission sequence of the first secondary device. Alternatively, the primary device may determine the uplink air interface transmission sequence based on priorities of the plurality of pieces of uplink buffer information. For example, when a priority of the first uplink data is higher than a priority of the second uplink data, the primary device determines that the uplink air interface transmission sequence of the first secondary device precedes over the uplink air interface transmission sequence of the second secondary device.

In step 203, the primary device sends a first uplink control instruction to the first secondary device.

After determining the uplink air interface transmission sequence of the at least one secondary device, the primary device sends an uplink control instruction to a secondary device with a highest priority. Therefore, when the uplink air interface transmission sequence of the first secondary device precedes over the uplink air interface transmission sequence of the second secondary device, the primary device sends the first uplink control instruction to the first secondary device. A person skilled in the art may design a format of the first uplink control instruction based on a requirement. Therefore, a specific format of the first uplink control instruction is not limited in this embodiment of this application.

In step 204, the first secondary device performs air interface contention according to the first uplink control instruction, and receives the first uplink data from the associated first STA.

After the air interface contention succeeds, the first secondary device sends a first trigger frame to the first STA. The first STA sends the first uplink data to the first secondary device based on the first trigger frame. For descriptions of the first trigger frame, refer to the foregoing descriptions in FIG. 1. The first secondary device receives the first uplink data from the first STA.

In step 205, the first secondary device transmits the first uplink data to the primary device.

After receiving the first uplink data, the first secondary device sends the size of the first uplink data to the primary device. The primary device allocates a wired transmission uplink slot to the first secondary device based on the size of the first uplink data, and sends information about the uplink slot to the first secondary device. The first secondary device transmits the first uplink data to the primary device in the uplink slot.

In step 206, the primary device sends a second uplink control instruction to the second secondary device.

The primary device sequentially sends the uplink control instruction to the at least one secondary device based on the uplink air interface transmission sequence of the at least one secondary device. After sending the first uplink control instruction, the primary device sends the second uplink control instruction to the second secondary device. To avoid an air interface contention collision between the second secondary device and the first secondary device, after the air interface contention of the first secondary device succeeds, the first secondary device may send a first reply frame to the primary device. The primary device sends the second uplink control instruction to the second secondary device based on the first reply frame.

In step 207, the second secondary device performs air interface contention according to the second uplink control instruction, and receives the second uplink data from the associated second STA.

In step 208, the second secondary device transmits the second uplink data to the primary device.

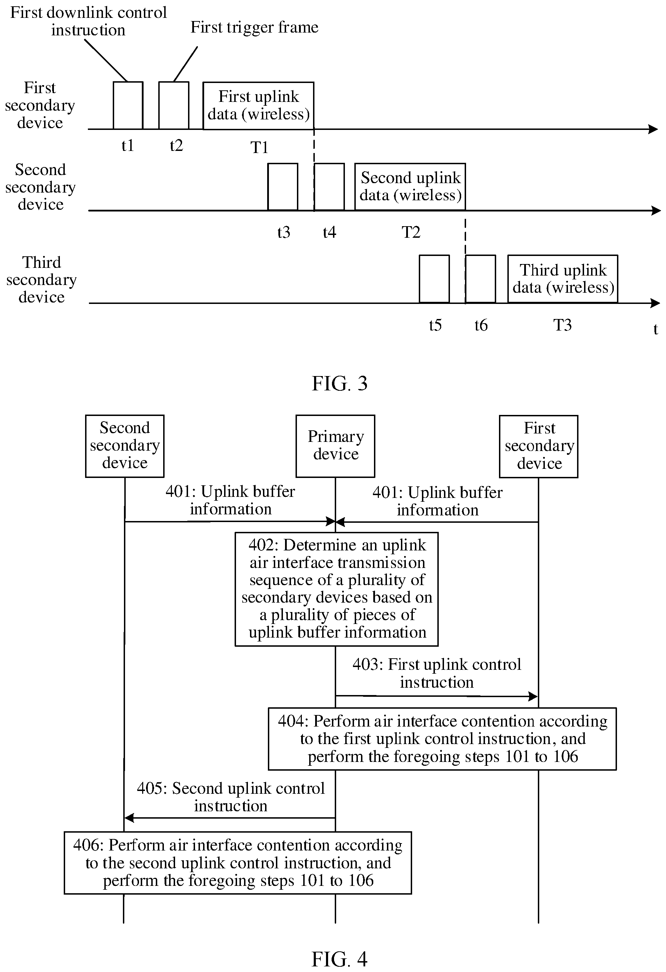

It should be understood that in FIG. 2, only an example in which the at least one secondary device includes the first secondary device and the second secondary device is used for description. During actual application, the at least one secondary device may further include more secondary devices. For example, the at least one secondary device further includes a third secondary device. The primary device receives third uplink buffer information from the third secondary device. The primary device determines the uplink air interface transmission sequence as the first secondary device, the second secondary device, and the third secondary device based on the plurality of pieces of uplink buffer information. FIG. 3 is a first time sequence diagram of uplink wireless transmission according to an embodiment of this application. As shown in FIG. 3, within time t1, a first secondary device receives a first uplink control instruction from a primary device, and performs air interface contention. After the air interface contention succeeds, the first secondary device sends a first trigger frame to a first STA within time t2. After sending the first trigger frame, the first secondary device receives first uplink data from the first STA within time T1. T1 may also be referred to as wireless transmission time of the first uplink data. Similarly, within time t3, a second secondary device receives a second uplink control instruction from the primary device, and performs air interface contention. After the air interface contention succeeds, the second secondary device sends a second trigger frame to a second STA within time t4. After sending the second trigger frame, the second secondary device receives second uplink data from the second STA within time T2. T2 may also be referred to as wireless transmission time of the second uplink data. For descriptions of the third secondary device, refer to the descriptions of the first secondary device and the second secondary device. t4 is after T1, and t6 is after T2.

Based on the foregoing descriptions of FIG. 2, the primary device may send a second downlink control instruction to the second secondary device based on a first reply frame. To reduce air interface idle time, the second secondary device may start air interface contention before a wireless transmission end moment of the first uplink data. Therefore, in this embodiment of this application, the second secondary device may receive the second uplink control instruction before the wireless transmission end moment of the first uplink data. For example, t3 is within T1. Therefore, in this embodiment of this application, a loopback delay between the secondary device and the primary device is determined and controllable. For example, time from a moment at which the first secondary device sends the first reply frame to the primary device to a moment at which the second secondary device receives the second uplink control instruction may be less than or equal to 64 microseconds. A moment at which the first secondary device sends the first reply frame is a second moment. The second moment may be a start moment of t2 in FIG. 3. A moment at which the second secondary device receives the second uplink control instruction is a third moment. The third moment may be an end moment of t3 in FIG. 3.

To accurately control a delay between the secondary device and the primary device, the secondary device and the primary device may communicate through the PON protocol, the optical transport network (optical transport network, OTN) protocol, or the time-sensitive network (time-sensitive network, TSN) protocol. For example, the first secondary device sends the first reply frame to the primary device through the OTN protocol. The primary device sends the second uplink control instruction to the second secondary device through the OTN protocol.

In FIG. 3, after the air interface contention succeeds, the second secondary device may further send a second reply frame to the primary device. The second reply frame indicates that the second secondary device has successfully obtained an air interface through contention. The primary device sends a third uplink control instruction to the third secondary device based on the second reply frame.

In the data transmission method provided in FIG. 2, the primary device performs uplink air interface scheduling for a STA associated with the at least one secondary device. Therefore, the STA associated with the at least one secondary device may not need to perform uplink air interface contention, thereby reducing a probability of an air interface collision. In addition, to further reduce a probability of air interface contention, the at least one secondary device may be in an uplink silent state. When not receiving the uplink control instruction, the secondary device in the uplink silent state does not send a trigger frame to the STA through air interface contention.

FIG. 4 is a third schematic flowchart of a data transmission method according to an embodiment of this application. As shown in FIG. 4, the data transmission method includes the following steps.

In step 401, a primary device receives a plurality of pieces of uplink buffer information from at least one secondary device.

In step 402, the primary device determines an uplink air interface transmission sequence of the at least one secondary device based on the plurality of pieces of uplink buffer information.

In step 403, the primary device sends a first uplink control instruction to the first secondary device.

In step 404, air interface contention is performed according to the first uplink control instruction, and the foregoing steps 101 to 106 are performed.

After receiving the first uplink control instruction, the first secondary device performs air interface contention according to the first uplink control instruction, and performs step 101 and step 102 in FIG. 1. In step 102, the first secondary device sends a first reply frame to the primary device. The first reply frame includes a size of first uplink data and wireless transmission time information. The primary device is configured to perform step 103 and step 104. A first STA is configured to perform step 105. The first secondary device is further configured to perform step 106.

In step 405, the primary device sends a second uplink control instruction to a second secondary device.

To avoid an air interface contention collision between the second secondary device and the first secondary device, the primary device may send the second uplink control instruction to the second secondary device based on the first reply frame.

In step 406, air interface contention is performed according to the second uplink control instruction, and the foregoing steps 101 to 106 are performed.

After receiving the second uplink control instruction, the second secondary device performs air interface contention according to the second uplink control instruction, and performs step 101 and step 102 in FIG. 1. In step 102, the second secondary device sends a second reply frame to the primary device. The second reply frame includes a size of the second uplink data and wireless transmission time information. The wireless transmission time information includes wireless transmission time information of the second trigger frame or the second uplink data. The primary device is configured to perform step 103 and step 104. The second STA is configured to perform step 105. The second secondary device is further configured to perform step 106.

It should be understood that descriptions of the data transmission method in FIG. 4 are similar to the descriptions in FIG. 1 and FIG. 2. Therefore, for the descriptions of FIG. 4, refer to the descriptions in FIG. 1 and FIG. 2. For example, for descriptions of steps 401 to 403, refer to the descriptions of steps 201 to 203 in FIG. 2. For another example, for descriptions of step 404, refer to the descriptions of steps 101 to 106 in FIG. 1.

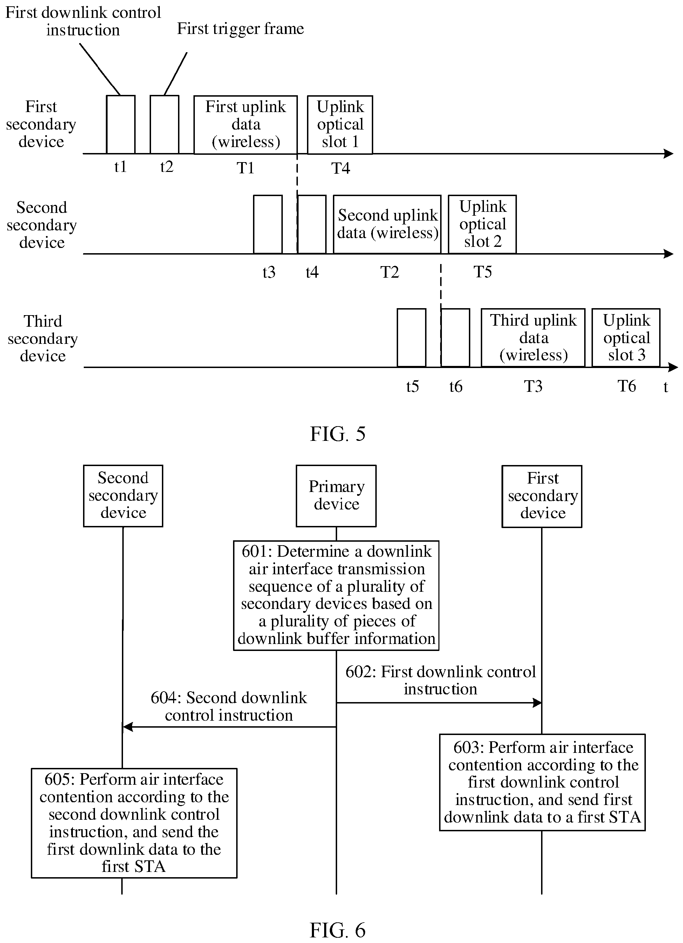

FIG. 5 is a second time sequence diagram of uplink wireless transmission according to an embodiment of this application. As shown in FIG. 5, based on FIG. 3, a first secondary device sends first uplink data to a primary device within time T4. T4 may also be referred to as wired transmission time of the first uplink data. Similarly, a second secondary device sends second uplink data to the primary device within time T5. T5 may also be referred to as wired transmission time of the second uplink data. A third secondary device sends third uplink data to the primary device within time T6. T6 may also be referred to as wired transmission time of the third uplink data. In the foregoing descriptions of FIG. 2, the primary device performs uplink air interface allocation for a STA associated with at least one secondary device. During actual application, the primary device may also perform downlink air interface allocation for the at least one secondary device. FIG. 6 is a fourth schematic flowchart of a data transmission method according to an embodiment of this application. As shown in FIG. 6, the data transmission method includes the following steps.

In step 601, a primary device determines a downlink air interface transmission sequence of at least one secondary device based on a plurality of pieces of downlink buffer information.

The primary device may periodically obtain the plurality of pieces of downlink buffer information from the at least one secondary device. The plurality of pieces of downlink buffer information and a plurality of secondary devices are in a one-to-one correspondence. For example, the primary device obtains first downlink buffer information from the first secondary device. The primary device obtains second downlink buffer information from the second secondary device. The downlink buffer information is used for representing a size of downlink data that is in the secondary device and that is to be sent to a STA. The primary device determines the downlink air interface transmission sequence of the at least one secondary device based on the plurality of pieces of downlink buffer information. For example, the primary device determines the downlink air interface transmission sequence based on sizes of the plurality of pieces of downlink buffer information. For another example, the primary device determines the downlink air interface transmission sequence based on sizes and priorities of the plurality of pieces of downlink buffer information. For descriptions of the primary device, the at least one secondary device, and the STA, refer to the foregoing descriptions in FIG. 1.

In step 602, the primary device sends a first downlink control instruction to the first secondary device.

After determining the downlink air interface transmission sequence of the at least one secondary device, the primary device sequentially sends the downlink control instruction to the at least one secondary device based on the downlink air interface transmission sequence. In this embodiment of this application, it is assumed that a downlink air interface transmission sequence of the first secondary device precedes over a downlink air interface transmission sequence of the second secondary device. Therefore, the primary device first sends the first downlink control instruction to the first secondary device.

In step 603, the first secondary device performs air interface contention according to the first downlink control instruction, and sends first downlink data to a first STA.

After the air interface contention succeeds, the first secondary device sends the first downlink data to the first STA. A size of the first downlink data may be less than or equal to a size of first downlink buffer data. After obtaining an air interface through contention, the first secondary device may send a first reply frame to the primary device. The first reply frame indicates that the first secondary device has successfully obtained a downlink air interface through contention.

In step 604, the primary device sends a second downlink control instruction to the second secondary device.

To prevent the second secondary device and the first secondary device from contending for an air interface with each other before the first secondary device obtains the air interface through contention, the primary device may send the second downlink control instruction to the second secondary device based on the first reply frame sent by the first secondary device.

In step 605, the second secondary device performs air interface contention according to the second downlink control instruction, and sends second downlink data to a second STA.

After the air interface contention succeeds, the second secondary device sends the second downlink data to the second STA. A size of the second downlink data may be less than or equal to a size of second downlink buffer data. After obtaining an air interface through contention, the second secondary device may send a second reply frame to the primary device. The second reply frame indicates that the second secondary device has successfully obtained a downlink air interface through contention.

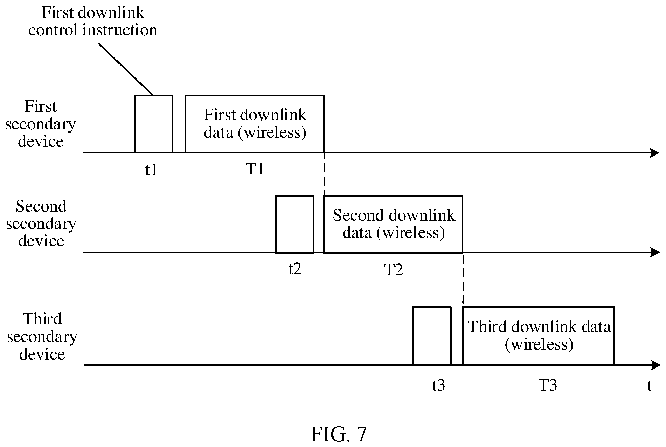

It should be understood that in FIG. 6, only an example in which the at least one secondary device includes the first secondary device and the second secondary device is used for description. During actual application, the at least one secondary device may further include more secondary devices. For example, the at least one secondary device further includes a third secondary device. The primary device receives third downlink buffer information from the third secondary device. The primary device determines the downlink air interface transmission sequence as the first secondary device, the second secondary device, and the third secondary device based on the plurality of pieces of downlink buffer information. FIG. 7 is a time sequence diagram of downlink wireless transmission according to an embodiment of this application. As shown in FIG. 7, within time t1, a first secondary device receives a first downlink control instruction from a primary device, and performs air interface contention. After the air interface contention succeeds, the first secondary device sends first downlink data to a first STA within time T1. T1 may also be referred to as wireless transmission time of the first downlink data. Similarly, within time t2, a second secondary device receives a second downlink control instruction from the primary device, and performs air interface contention. After the air interface contention succeeds, the second secondary device sends second downlink data to a second STA within time T2. T2 may also be referred to as wireless transmission time of the second downlink data. For descriptions of a third secondary device, refer to the descriptions of the first secondary device and the second secondary device. To reduce a probability of an air interface collision, t2 may be within T1, and t3 may be within T2.

In the data transmission method provided in FIG. 6, the primary device performs downlink air interface scheduling for at least one secondary device. Therefore, the at least one secondary device may not need to perform downlink air interface contention, thereby reducing the probability of an air interface collision. In addition, to further reduce a probability of air interface contention, the at least one secondary device may be in a downlink silent state. When not receiving the downlink control instruction, even if the secondary device has buffer data to be sent to a STA, the secondary device in the downlink silent state does not send downlink data to the STA through air interface contention.

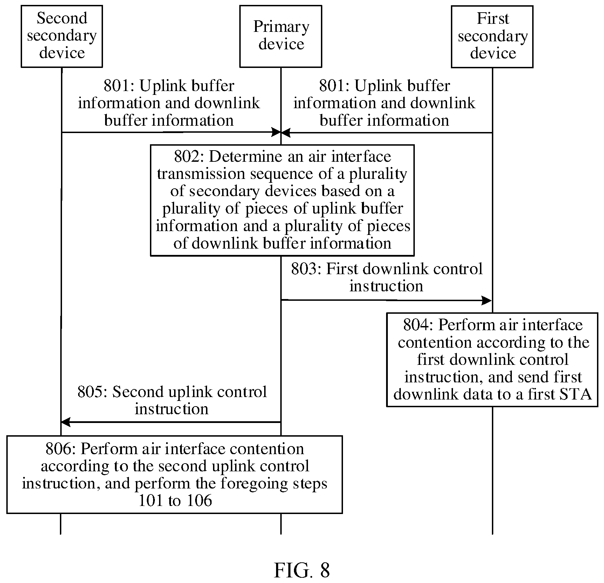

In the data transmission method provided in FIG. 2, the primary device performs uplink air interface scheduling for a STA associated with the at least one secondary device. In an example in FIG. 6, the primary device performs the downlink air interface scheduling for the at least one secondary device. During actual application, the primary device may perform the uplink air interface scheduling and the downlink air interface scheduling at the same time. FIG. 8 is a fifth schematic flowchart of a data transmission method according to an embodiment of this application. As shown in FIG. 8, the data transmission method includes the following steps.

In step 801, a primary device receives a plurality of pieces of uplink buffer information and a plurality of pieces of downlink buffer information from at least one secondary device.

One secondary device is configured to send one piece of uplink buffer information and one piece of downlink buffer information to the primary device. For descriptions of the uplink buffer information, refer to the descriptions of step 201 in FIG. 2. For descriptions of the downlink buffer information, refer to the descriptions of step 601 in FIG. 6. For descriptions of the primary device, the at least one secondary device, and the STA, refer to the foregoing descriptions in FIG. 1.

In step 802, the primary device determines an air interface transmission sequence of the at least one secondary device based on the plurality of pieces of uplink buffer information and the plurality of pieces of downlink buffer information.

It is assumed that the plurality of pieces of uplink buffer information include first uplink buffer information and second uplink buffer information. The plurality of pieces of downlink buffer information include first downlink buffer information and second downlink buffer information. The primary device may determine the air interface transmission sequence of the at least one secondary device based on sizes of the plurality of pieces of uplink buffer information and the plurality of pieces of downlink buffer information. For example, four pieces of buffer information are sequentially sorted by size as the first downlink buffer information, the second uplink buffer information, the first uplink buffer information, and the second downlink buffer information. The primary device determines that the air interface transmission sequence of the at least one secondary device is sequentially downlink of a first secondary device, uplink of a second secondary device, uplink of the first secondary device, and downlink of the second secondary device. In another example, the primary device may alternatively determine the air interface transmission sequence of the at least one secondary device based on priorities of the plurality of pieces of uplink buffer information and the plurality of pieces of downlink buffer information.

In step 803, the primary device sends a first downlink control instruction to the first secondary device.

After determining the air interface transmission sequence of the at least one secondary device, the primary device sequentially sends a control instruction to the at least one secondary device based on the air interface transmission sequence. In an example of step 802, the air interface transmission sequence of the at least one secondary device is sequentially the downlink of the first secondary device, the uplink of the first secondary device, the uplink of the second secondary device, and the downlink of the second secondary device. Therefore, the primary device sends the first downlink control instruction to the first secondary device.

In step 804, the first secondary device performs air interface contention according to the first downlink control instruction, and sends first downlink data to a first STA.

In step 805, the primary device sends a second uplink control instruction to a second secondary device.

In step 806, air interface contention is performed according to the second uplink control instruction, and the foregoing steps 101 to 106 are performed.

After sending the second uplink control instruction, the primary device sends a first uplink control instruction to a first secondary device. The first secondary device performs air interface contention according to the first uplink control instruction. The first secondary device performs the air interface contention according to the first uplink control instruction, and transmits first uplink data to the primary device based on the manner in FIG. 2. After sending the first uplink control instruction, the primary device sends the second downlink control instruction to the second secondary device. The second secondary device performs air interface contention according to the second downlink control instruction, and sends second downlink data to a second STA.

It should be understood that descriptions of the data transmission method in FIG. 8 are similar to the descriptions in FIG. 4 and FIG. 6. Therefore, for the descriptions of FIG. 8, refer to the descriptions in FIG. 4 and FIG. 6. For example, for descriptions of steps 803 and 804, refer to the descriptions of steps 602 and 603 in FIG. 6. For another example, for descriptions of step 806, refer to the descriptions of step 404 in FIG. 4.

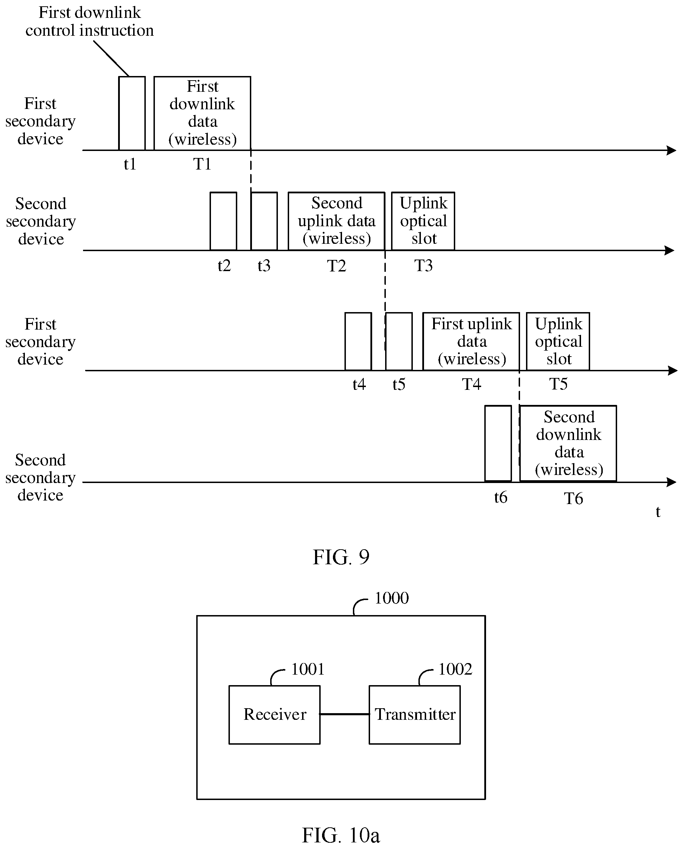

FIG. 9 is a time sequence diagram of wireless transmission according to an embodiment of this application. As shown in FIG. 9, within time t1, a first secondary device receives a first downlink control instruction from a primary device, and performs air interface contention. After the air interface contention succeeds, the first secondary device sends first downlink data to a first STA within time T1. Within time t2, a second secondary device receives a second uplink control instruction from the primary device, and performs air interface contention. After the air interface contention succeeds, the second secondary device sends a second trigger frame to a second STA within time t3. After sending the second trigger frame, the second secondary device receives second uplink data from the second STA within time T2, and transmits the second uplink data to the primary device within time T3. Similarly, within time t4, the first secondary device receives a first uplink control instruction from the primary device, and performs air interface contention. After the air interface contention succeeds, the first secondary device sends a first trigger frame to the first STA within time t5. After sending the first trigger frame, the first secondary device receives first uplink data from the first STA within time T4, and transmits the first uplink data to the primary device within time T5. Within time t6, the second secondary device receives a second downlink control instruction from the primary device, and performs air interface contention. After the air interface contention succeeds, the second secondary device sends second downlink data to the second STA within time T6. t3 is after T1, and t5 is after T2. To reduce a probability of an air interface collision, t2 may be within T1, t4 may be within T2, and t6 may be within T4.

Based on the foregoing descriptions of FIG. 3, in uplink data transmission, time from a moment at which the first secondary device sends the first reply frame to the primary device to a moment at which the second secondary device receives the second uplink control instruction may be less than or equal to 64 microseconds. Similarly, in FIG. 7 and FIG. 9, the primary device may also send a second control instruction to the second secondary device based on a first reply frame. The second control instruction is a second uplink control instruction or a second downlink control instruction. Therefore, in an example in FIG. 7 or FIG. 9, time from the moment at which the first secondary device sends the first reply frame to the primary device to a moment at which the second secondary device receives the second control instruction may be less than or equal to 64 microseconds.

Based on the foregoing descriptions of FIG. 3, the second secondary device may receive the second uplink control instruction before a wireless transmission end moment of the first uplink data. During actual application, the second secondary device may receive the second control instruction before air interface transmission time of the first secondary device ends. The air interface transmission time may be wireless transmission time of the first downlink data and/or the first uplink data. For example, in FIG. 7, the second secondary device may receive a second uplink control instruction before the wireless transmission time of the first downlink data ends. In the data transmission method provided in FIG. 8, the primary device performs uplink air interface scheduling and downlink air interface scheduling at the same time. Therefore, a STA associated with at least one secondary device and the at least one secondary device may not need to perform air interface contention, thereby reducing a probability of an air interface collision. In addition, to further reduce a probability of air interface contention, the at least one secondary device may be in a silent state. When not receiving a control instruction, the secondary device in the silent state does not perform air interface contention. To prevent a STA from performing uplink air interface contention, the secondary device may further send a silence instruction to the associated STA, where the silence instruction instructs the associated STA not to perform air interface contention.

In examples in FIG. 8 and FIG. 9, the primary device sends four control instructions to the secondary device, and the secondary device performs four times of air interface contention according to the four control instructions. During actual application, the secondary device may perform uplink and downlink data transmission separately according to one control instruction, thereby reducing a quantity of times of air interface contention. For example, the primary device determines an air interface transmission sequence of the at least one secondary device based on sizes of a plurality of pieces of uplink buffer information and a plurality of pieces of downlink buffer information. The air interface transmission sequence is sequentially downlink of the first secondary device, uplink of the first secondary device, downlink of the second secondary device, and uplink of the second secondary device. The primary device sequentially sends control instructions to the first secondary device and the second secondary device based on the air interface transmission sequence. First, the primary device sends a first control instruction to the first secondary device. The first secondary device performs air interface contention according to the first control instruction, and divides time obtained through the air interface contention into two parts. One part is used for sending the first downlink data to the first STA. The other part is used for sending the first trigger frame to the first STA, and receiving the first uplink data from the first STA. Similarly, the primary device further sends the second control instruction to the second secondary device. The second secondary device performs air interface contention according to the second control instruction, and divides time obtained through the air interface contention into two parts. One part is used for sending the second downlink data to the second STA. The other part is used for sending the second trigger frame to the second STA, and receiving the second uplink data from the second STA.

It should be understood that, in the embodiment in FIG. 5, only an example in which the at least one secondary device includes the first secondary device and the second secondary device is used for description. During actual application, the at least one secondary device may further include more secondary devices. For example, the at least one secondary device further includes a third secondary device, a fourth secondary device, and a fifth secondary device. In this case, the primary device may determine an air interface transmission sequence of five secondary devices based on 10 pieces of buffer information.

It should be understood that a size of to-be-transmitted data indicated by buffer information may be 0. For example, a size of to-be-uploaded data of the first STA is 0. In this case, a size of to-be-transmitted data indicated by first uplink buffer information is 0. When the first STA has no to-be-uploaded data, the primary device does not need to send the first uplink control instruction to the first secondary device. For example, in an example in FIG. 8, a size of the to-be-uploaded data of the first STA is 0, and an air interface transmission sequence determined by the primary device is sequentially the downlink of the first secondary device, the uplink of the second secondary device, and the downlink of the second secondary device.

In examples in FIG. 2 and FIG. 4, the air interface transmission sequence of the at least one secondary device is an uplink air interface transmission sequence. In an example in FIG. 6, the air interface transmission sequence of the at least one secondary device is a downlink air interface transmission sequence. In an example in FIG. 8, the air interface transmission sequence of the at least one secondary device is a combination of an uplink air interface transmission sequence and a downlink air interface transmission sequence. During actual application, the primary device may update the air interface transmission sequence in real time. For example, in an example in FIG. 8, after the primary device determines the air interface transmission sequence, the primary device receives third buffer information of the third secondary device. The primary device updates the air interface transmission sequence based on the third buffer information.

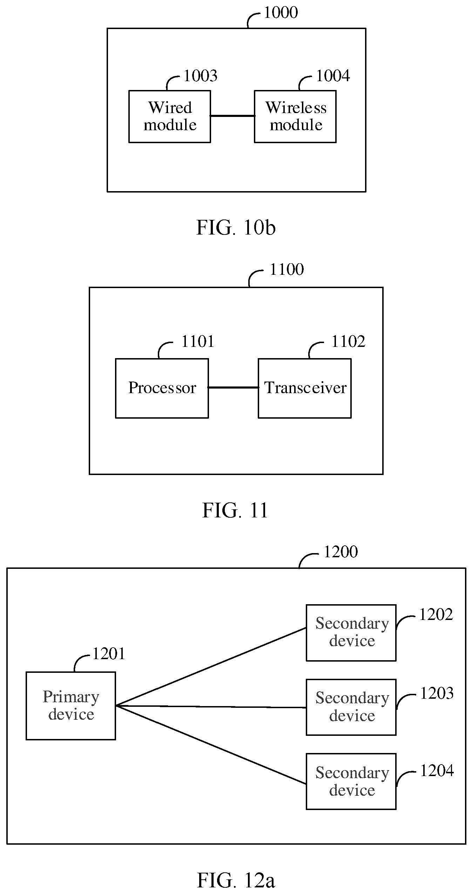

The foregoing describes the data transmission method provided in embodiments of this application, and the following describes a first secondary device and a primary device provided in embodiments of this application. FIG. 10a is a first schematic structural diagram of a first secondary device according to an embodiment of this application. As shown in FIG. 10a, a first secondary device 1000 includes a receiver 1001 and a transmitter 1002. The transmitter 1002 is configured to send a first trigger frame to a first STA. The first trigger frame indicates the first STA to upload first uplink data. The first secondary device is associated with the first STA. Before receiving the first uplink data, the transmitter 1002 is further configured to send a size of target data to a primary device. The first secondary device may not have started receiving the first uplink data, or may have received a part of the first uplink data. The target data includes the first uplink data. The receiver 1001 is configured to receive information about an uplink slot from the primary device. The uplink slot is obtained based on the size of the target data. The receiver 1001 is further configured to receive the first uplink data from the first STA. The transmitter 1002 is further configured to transmit the first uplink data to the primary device in the uplink slot. FIG. 10b is a second schematic structural diagram of a first secondary device according to an embodiment of this application. As shown in FIG. 10b, a first secondary device 1000 includes a wired module 1003 and a wireless module 1004. The wireless module 1004 is configured to send a first trigger frame to a first STA. The first trigger frame indicates the first STA to upload first uplink data. The first secondary device is associated with the first STA. The wired module 1003 may be an optical transceiver module. Before receiving the first uplink data, the wired module 1003 is further configured to send a size of target data to a primary device. The target data includes the first uplink data. The wired module 1003 is further configured to receive information about an uplink slot from the primary device. The uplink slot is obtained based on the size of the target data. The wireless module 1004 is further configured to receive the first uplink data from the first STA. The wired module 1003 is further configured to transmit the first uplink data to the primary device in the uplink slot.

In another embodiment, the first secondary device 1000 may further include a processor. The processor may be a central processing unit (central processing unit, CPU), a network processor (network processor, NP), or a combination of the CPU and the NP. The processor may further include a hardware chip or another general-purpose processor. The hardware chip may be an application-specific integrated circuit (application-specific integrated circuit, ASIC), a programmable logic device (programmable logic device, PLD), or a combination thereof.

FIG. 11 is a schematic structural diagram of a primary device according to an embodiment of this application. As shown in FIG. 11, a primary device 1100 includes a processor 1101 and a transceiver 1102. The transceiver 1102 is configured to receive a size of target data from a first secondary device. The first secondary device may include the size of the target data in a first reply frame. The first secondary device is associated with a first STA. The target data includes first uplink data that has not been received by the first secondary device. The first uplink data is sent by the first STA based on a first trigger frame. The processor 1101 is configured to allocate an uplink slot to the first secondary device based on the size of the target data. The transceiver 1102 is further configured to: send information about the uplink slot to the first secondary device, and receive the first uplink data from the first secondary device in the uplink slot. In another embodiment, the primary device 1100 and/or the first secondary device 1000 may further include a memory. The memory may be a volatile memory or a nonvolatile memory, or may include the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). In the first secondary device 1000, the memory may be configured to store the information about the uplink slot. In the primary device 1100, the memory may be configured to store the first uplink data.

It should be understood that descriptions of the primary device 1100 or the first secondary device 1000 are similar to the descriptions of the foregoing data transmission method. Therefore, for the descriptions of the primary device 1100 and/or the first secondary device 1000, refer to the descriptions in any one of FIG. 1 to FIG. 9. For example, the first secondary device may be an SFU or a secondary FTTR. The primary device may be an MFU or a main FTTR.

FIG. 12a is a first schematic structural diagram of a communication system according to an embodiment of this application. As shown in FIG. 12a, a communication system 1200 includes a primary device 1201 and at least one secondary device. In an example in FIG. 12a, the at least one secondary device includes secondary devices 1202 to 1204. The at least one secondary device includes a first secondary device. The first secondary device may be any secondary device in the secondary devices 1202 to 1204. The first secondary device is associated with a first STA. The first secondary device is configured to send a first trigger frame to the first STA. The first trigger frame indicates the first STA to upload first uplink data. Before receiving the first uplink data, the first secondary device is further configured to send a size of target data to the primary device. The target data includes the first uplink data. The primary device 1201 is configured to: allocate an uplink slot to the first secondary device based on the size of the target data and wireless transmission time information, and send information about the uplink slot to the first secondary device. The first secondary device is further configured to: receive the first uplink data from the first STA, and transmit the first uplink data to the primary device 1201 in the uplink slot. It should be understood that descriptions of the communication system 1200 are similar to the descriptions of the foregoing data transmission method. Therefore, for the descriptions of the communication system 1200, refer to the descriptions in any one of FIG. 1 to FIG. 9. For example, the first secondary device may be an SFU or a secondary FTTR. The primary device 1201 may be an MFU or a main FTTR. For another example, the first secondary device does not have a complete wireless function. The primary device 1201 is further configured to send the first trigger frame to the first secondary device.

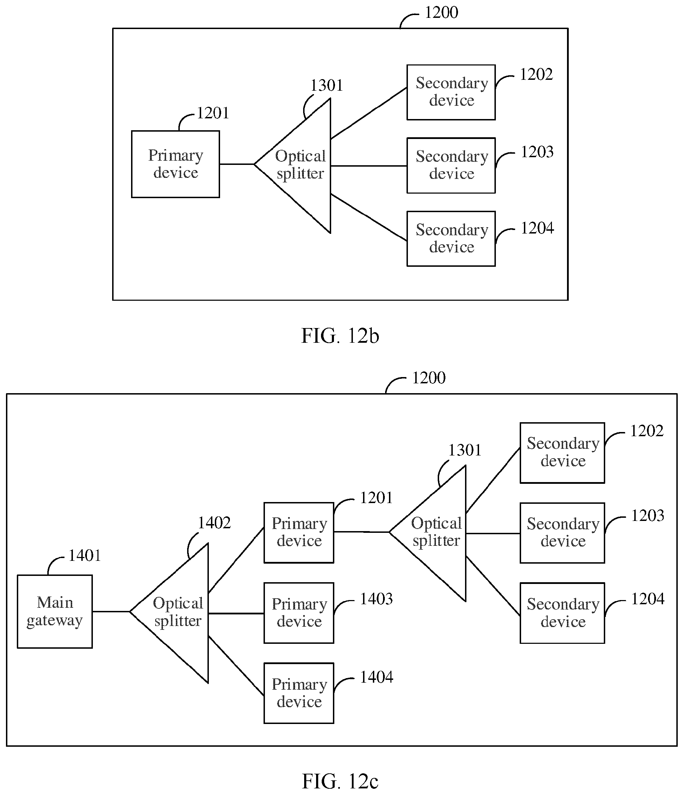

FIG. 12b is a second schematic structural diagram of a communication system according to an embodiment of this application. As shown in FIG. 12b, based on FIG. 12a, the communication system 1200 further includes an optical splitter 1301. In an uplink direction, uplink optical signals from all the secondary devices are coupled to the primary device 1201 through the optical splitter 1301 in a time division manner. In a downlink direction, the primary device 1201 allocates downlink optical signals to all the secondary devices through the optical splitter 1301. For example, in an uplink direction, the first secondary device sends first uplink data to the primary device 1201 through the optical splitter 1301.

FIG. 12c is a third schematic structural diagram of a communication system according to an embodiment of this application. As shown in FIG. 12c, based on FIG. 12b, the communication system 1200 further includes a main gateway 1401, an optical splitter 1402, a primary device 1403, and a primary device 1404. The main gateway 1401 may be an OLT. The main gateway 1401 is connected to a plurality of primary devices through the optical splitter 1402. In an example of FIG. 12c, the plurality of primary devices include a primary device 1201, the primary device 1403, and the primary device 1404. The primary device may be an ONU or an ONT. In an uplink direction, uplink optical signals from all the primary devices are coupled to the main gateway 1401 through the optical splitter 1402 in a time division manner. In a downlink direction, the main gateway 1401 allocates downlink optical signals to all the primary devices through the optical splitter 1402. For example, in an uplink direction, the primary device 1201 sends first uplink data to the main gateway 1401 through the optical splitter 1402.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A first secondary device, comprising a receiver and a transmitter, wherein
the transmitter is configured to send a first trigger frame to a first station STA, wherein the first trigger frame indicates the first STA to upload first uplink data, and the first secondary device is associated with the first STA;
before receiving the first uplink data, the transmitter is further configured to send a size of target data to a primary device, wherein the target data comprises the first uplink data;
the receiver is configured to receive information about an uplink slot from the primary device, wherein the uplink slot is obtained based on the size of the target data;
the receiver is further configured to receive the first uplink data from the first STA; and
the transmitter is further configured to transmit the first uplink data to the primary device in the uplink slot.

2. The first secondary device according to claim 1, wherein
the transmitter is further configured to send wireless transmission time information to the primary device, wherein the wireless transmission time information comprises wireless transmission time information of the first trigger frame or the first uplink data; and
the uplink slot is obtained based on the size of the target data and the wireless transmission time information.

3. The first secondary device according to claim 2, wherein
that the transmitter is configured to send a first trigger frame to a first STA comprises: the transmitter is configured to send the first trigger frame to the first STA at a first moment, wherein the wireless transmission time information of the first trigger frame comprises information about the first moment and wireless transmission duration of the first trigger frame.

4. The first secondary device according to any one of claims 1 to 3, wherein
the receiver is further configured to receive the first trigger frame from the primary device.

5. The first secondary device according to any one of claims 1 to 4, wherein the first secondary device further comprises a processor, wherein
the processor is configured to split the first uplink data into a plurality of pieces of uplink sub-data, wherein the uplink slot comprises a plurality of time periods that are non-consecutive; and
that the transmitter is further configured to transmit the first uplink data to the primary device in the uplink slot comprises: the transmitter is configured to transmit the plurality of pieces of uplink sub-data to the primary device in the plurality of time periods, wherein the plurality of time periods and the plurality of pieces of uplink sub-data are in a one-to-one correspondence.

6. The first secondary device according to any one of claims 1 to 5, wherein
the receiver is further configured to: receive a first uplink control instruction from the primary device, and perform air interface contention according to the first uplink control instruction; and
that the transmitter is configured to send a first trigger frame to a first STA comprises: after the air interface contention succeeds, the transmitter is configured to send the first trigger frame to the first STA.

7. The first secondary device according to claim 6, wherein before receiving the first uplink control instruction, the first secondary device is in a silent state.

8. The first secondary device according to any one of claims 1 to 7, wherein wired communication is performed between the primary device and the first secondary device, and wireless communication is performed between the first secondary device and the first STA.

9. A primary device, comprising a processor and a transceiver, wherein
the transceiver is configured to receive a size of target data from a first secondary device, wherein the first secondary device is associated with a first station STA, the target data comprises first uplink data that has not been received by the first secondary device, and the first uplink data is sent by the first STA based on a first trigger frame;
the processor is configured to allocate an uplink slot to the first secondary device based on the size of the target data; and
the transceiver is further configured to: send information about the uplink slot to the first secondary device, and receive the first uplink data from the first secondary device in the uplink slot.

10. The primary device according to claim 9, wherein
the transceiver is further configured to receive wireless transmission time information from the first secondary device, wherein the wireless transmission time information comprises wireless transmission time information of the first trigger frame or the first uplink data; and
that the processor is configured to allocate an uplink slot to the first secondary device based on the size of the target data comprises: the processor is configured to allocate the uplink slot to the first secondary device based on the size of the target data and the wireless transmission time information.

11. The primary device according to claim 10, wherein the wireless transmission time information of the first trigger frame comprises information about a first moment and wireless transmission duration of the first trigger frame, and the first moment is a moment at which the first secondary device sends the first trigger frame; and
that the processor is configured to allocate the uplink slot to the first secondary device based on the size of the target data and the wireless transmission time information comprises: the processor is configured to: obtain a wireless transmission end moment of the first uplink data based on the wireless transmission duration of the first trigger frame, the first moment, and a size of the first uplink data, and allocate the uplink slot to the first secondary device based on the wireless transmission end moment and the size of the target data.

12. The primary device according to any one of claims 9 to 11, wherein
the processor is further configured to generate the first trigger frame; and
the transceiver is further configured to transmit the first trigger frame to the first secondary device.

13. The primary device according to any one of claims 9 to 12, wherein the uplink slot comprises a plurality of time periods that are non-consecutive;
that the transceiver is further configured to receive the first uplink data from the first secondary device in the uplink slot comprises: the transceiver is further configured to receive a plurality of pieces of uplink sub-data from the first secondary device in the plurality of time periods, wherein the plurality of time periods and the plurality of pieces of uplink sub-data are in a one-to-one correspondence; and
the processor is further configured to combine the plurality of pieces of uplink sub-data, to obtain the first uplink data.

14. The primary device according to any one of claims 9 to 13, wherein
the processor is further configured to generate a first uplink control frame based on an air interface transmission sequence of at least one secondary device;
the transceiver is further configured to send a first uplink control instruction to the first secondary device, wherein the first uplink control instruction instructs the first secondary device to perform air interface contention, and to send the first trigger frame to the first STA after the air interface contention succeeds; and the at least one secondary device comprises the first secondary device.

15. The primary device according to claim 14, wherein the at least one secondary device further comprises a second secondary device;
that the transceiver is configured to receive a size of target data from a first secondary device comprises: the transceiver is configured to receive a first reply frame from the first secondary device, wherein the first reply frame comprises the size of the target data; and
based on the first reply frame, the transceiver is further configured to send a second control instruction to the second secondary device based on the air interface transmission sequence, wherein the second control instruction instructs the second secondary device to perform air interface contention and perform air interface transmission.

16. The primary device according to claim 15, wherein the second secondary device is associated with a second STA, and the second control instruction is a second uplink control instruction or a second downlink control instruction; and
that the second control instruction instructs the second secondary device to perform air interface contention and perform air interface transmission comprises:
the second uplink control instruction instructs the second secondary device to perform air interface contention, and send a second trigger frame to the second STA after the air interface contention succeeds, wherein the second trigger frame indicates the second STA to upload second uplink data; and
the second downlink control instruction instructs the second secondary device to perform air interface contention, and send second downlink data to the second STA after the air interface contention succeeds.

17. The primary device according to claim 15 or 16, wherein a moment at which the first secondary device sends the first reply frame is a second moment, a moment at which the second secondary device receives the second control instruction is a third moment, and an interval between the second moment and the third moment is less than or equal to 64 microseconds.

18. The primary device according to any one of claims 15 to 17, wherein the third moment is within a wireless transmission time period of the first uplink data.

19. The primary device according to any one of claims 15 to 18, wherein a control frame is transmitted between the primary device and the first secondary device, and between the primary device and the second secondary device through the passive optical network PON protocol, the optical transport network OTN protocol, or the time-sensitive network TSN protocol, and the control frame comprises the first reply frame and the second control instruction.

20. The primary device according to any one of claims 14 to 19, wherein
the transceiver is further configured to: receive a plurality of pieces of buffer information from the at least one secondary device, and determine the air interface transmission sequence based on the plurality of pieces of buffer information.

21. A communication system, comprising a primary device and at least one secondary device, wherein
the primary device is connected to the at least one secondary device, wherein the at least one secondary device comprises a first secondary device, and the first secondary device is associated with a first station STA;
the first secondary device is configured to send a first trigger frame to the first STA, wherein the first trigger frame indicates the first STA to upload first uplink data;
before receiving the first uplink data, the first secondary device is further configured to send a size of target data to the primary device, wherein the target data comprises the first uplink data;
the primary device is configured to: allocate an uplink slot to the first secondary device based on the size of the target data and wireless transmission time information, and send information about the uplink slot to the first secondary device; and
the first secondary device is further configured to: receive the first uplink data from the first STA, and transmit the first uplink data to the primary device in the uplink slot.

22. The communication system according to claim 21, wherein the first secondary device is further configured to send wireless transmission time information to the primary device, wherein the wireless transmission time information comprises wireless transmission time information of the first trigger frame or the first uplink data; and
that the primary device is configured to allocate an uplink slot to the first secondary device based on the size of the target data comprises: the primary device is configured to allocate the uplink slot to the first secondary device based on the size of the target data and the wireless transmission time information.

23. The communication system according to claim 22, wherein
that the first secondary device is configured to send a first trigger frame to the first STA comprises: the first secondary device is configured to send the first trigger frame to the first STA at a first moment, wherein wireless transmission time information of the first trigger frame comprises information about the first moment and wireless transmission duration of the first trigger frame; and
that the primary device is further configured to allocate the uplink slot to the first secondary device based on the size of the target data and the wireless transmission time information comprises: the primary device is configured to: obtain a wireless transmission end moment of the first uplink data based on the transmission duration of the first trigger frame, the first moment, and a size of the first uplink data, and allocate the uplink slot to the first secondary device based on the wireless transmission end moment and the size of the target data.

24. The communication system according to any one of claims 21 to 23, wherein
the primary device is further configured to: generate the first trigger frame, and transmit the first trigger frame to the first secondary device; and
the first secondary device is further configured to receive the first trigger frame from the primary device.

25. The communication system according to any one of claims 21 to 24, wherein
the first secondary device is further configured to split the first uplink data into a plurality of pieces of uplink sub-data, wherein the uplink slot comprises a plurality of time periods that are non-consecutive; and
that the first secondary device is further configured to transmit the first uplink data to the primary device in the uplink slot comprises: the first secondary device is further configured to transmit the plurality of pieces of uplink sub-data to the primary device in the plurality of time periods, wherein the plurality of time periods and the plurality of pieces of uplink sub-data are in a one-to-one correspondence.

26. A data transmission method, comprising:
sending, by a first secondary device, a first trigger frame to a first station STA, wherein the first trigger frame indicates the first STA to upload first uplink data, and the first secondary device is associated with the first STA;
before receiving the first uplink data, sending, by the first secondary device, a size of target data to a primary device, wherein the target data comprises the first uplink data;
receiving, by the first secondary device, information about an uplink slot from the primary device, wherein the uplink slot is obtained based on the size of the target data;
receiving, by the first secondary device, the first uplink data from the first STA; and
transmitting, by the first secondary device, the first uplink data to the primary device in the uplink slot.

27. The data transmission method according to claim 26, wherein the method further comprises:
sending, by the first secondary device, wireless transmission time information to the primary device, wherein the wireless transmission time information comprises wireless transmission time information of the first trigger frame or the first uplink data; and
the uplink slot is obtained based on the size of the target data and the wireless transmission time information.

28. The data transmission method according to claim 27, wherein
the sending, by a first secondary device, a first trigger frame to a first STA comprises: sending, by the first secondary device, the first trigger frame to the first STA at a first moment, wherein wireless transmission time information of the first trigger frame comprises information about the first moment and wireless transmission duration of the first trigger frame.

29. The data transmission method according to any one of claims 26 to 28, wherein the method further comprises:
receiving, by the first secondary device, the first trigger frame from the primary device.

30. The data transmission method according to any one of claims 26 to 29, wherein the method further comprises:
receiving, by the first secondary device, a first uplink control instruction from the primary device, and performing air interface contention according to the first uplink control instruction; and
the sending, by a first secondary device, a first trigger frame to a first STA comprises: sending, by the first secondary device, the first trigger frame to the first STA after the air interface contention succeeds.

31. A data transmission method, comprising:
receiving, by a primary device, a size of target data from a first secondary device, wherein the first secondary device is associated with a first station STA, the target data comprises first uplink data that has not been received by the first secondary device, and the first uplink data is sent by the first STA based on a first trigger frame;
allocating, by the primary device, an uplink slot to the first secondary device based on the size of the target data;
sending, by the primary device, information about the uplink slot to the first secondary device; and
receiving, by the primary device, the first uplink data from the first secondary device in the uplink slot.

32. The data transmission method according to claim 31, wherein the method further comprises:
receiving, by the primary device, wireless transmission time information from the first secondary device, wherein the wireless transmission time information comprises wireless transmission time information of the first trigger frame or the first uplink data; and
the allocating, by the primary device, an uplink slot to the first secondary device based on the size of the target data comprises: allocating, by the primary device, the uplink slot to the first secondary device based on the size of the target data and the wireless transmission time information.

33. The data transmission method according to claim 32, wherein the wireless transmission time information of the first trigger frame comprises information about a first moment and wireless transmission duration of the first trigger frame, and the first moment is a moment at which the first secondary device sends the first trigger frame; and
the allocating, by the primary device, the uplink slot to the first secondary device based on the size of the target data and the wireless transmission time information comprises: obtaining, by the primary device, a wireless transmission end moment of the first uplink data based on the transmission duration of the first trigger frame, the first moment, and a size of the first uplink data, and allocating the uplink slot to the first secondary device based on the wireless transmission end moment and the size of the target data.

34. The data transmission method according to any one of claims 31 to 33, wherein the method further comprises:
generating, by the primary device, the first trigger frame, and transmitting the first trigger frame to the first secondary device.

35. The data transmission method according to any one of claims 31 to 34, wherein the method further comprises:
sending, by the primary device, a first uplink control instruction to the first secondary device based on an air interface transmission sequence of at least one secondary device, wherein the first uplink control instruction instructs the first secondary device to perform air interface contention, and to send the first trigger frame to the first STA after the air interface contention succeeds; and the at least one secondary device comprises the first secondary device.
